# EUROPEAN PATENT APPLICATION

(11) **EP 2 591 879 A1**
(43) Date of publication of application: **15.05.2013**
(21) Application number: 11425272.9
(22) Date of filing: 10.11.2011
(51) Int. Cl.: B24B 9/06, B24B 9/10, B24B 27/00, B24B 41/00, B24B 41/02

(54) **Machine for grinding glass or stone sheets, including profiled sheets**

(71) Applicant: B Solution S.R.L. Unipersonale, 24060 Torre de'Roveri (BG) (IT)
(72) Inventor: Bonfanti, Gianluca, 24060 Torre de' Roveri (BG) (IT); Bonfanti, Raffaello, 24060 Torre de' Roveri (BG) (IT)
(74) Representative: Gatti, Enrico

(57) **Abstract**

The machine (10) enables grinding of glass or stone sheets (19) disposed off-vertical and with at least one rectilinear edge, it comprising a frame (12) carrying a spindle (40) for grinding the edges of a sheet (19), traversing means (14, 15) for bringing a glass sheet (19) fed to the machine (10) into a processing position and for then removing the sheet (19) from the processing position when processed, and means (30) for retaining a sheet (19) in the processing position. The means (30) for retaining the sheet (19) are of the suction type and act on a single face of the sheet (19), means (42) being provided for moving the grinding spindle (40) both off-vertically (B) and horizontally (A) in order to be able to process the entire perimeter of the sheet (19) retained in the processing position.

## Description

The present invention relates to a machine for grinding glass or stone sheets with at least one rectilinear edge. It should be noted that the term "glass" also includes plate glass and that "stone" includes both natural stone, such as marble, and artificial stone.

As known to experts of the art, glass sheets obtained from previous operations, such as cutting or shearing, are subjected to grinding in order to:
- modify the sheet geometry by a few millimetres by grinding the edges, to obtain the required shape and measurements;
- smooth and polish the sheet edges.

Two types of grinding machines are currently known, depending on whether the glass sheets are disposed horizontally or vertically during grinding.

However, the most modern grinding machines use "off-vertical" sheets, this term having been placed in inverted commas because in reality the sheets are positioned slightly inclined (by 3-4°) to the vertical, to enable them to rest not only along their lower rectilinear edge but also on one of their sides, to hence ensure stability.

These grinding machines (which will be known as off-vertical) have overall plan view dimensions which are considerably less than those of a grinding machine for horizontally disposed sheets, in addition to perfectly integrating into the latest available processing lines, which comprise for example cutting, boring and milling machines, and which dispense with the need to overturn the entering and leaving glass sheets.

In current off-vertical grinding machines, the glass sheets rest along their rectilinear lower edge by virtue of a motorized wheel device which enables them to traverse in an entry-exit direction which we shall indicate b A. In the case of a rectangular sheet, this latter halts in two positions such that firstly one and then the other vertical edge of the sheet lies in a position corresponding with a grinding spindle movable only vertically in the two directions such as to be able to operate firstly on one and then on the other of the two vertical edges of the sheet, whereas to process the two horizontal edges the spindle itself is maintained fixed at a suitable height and the sheet traverses horizontally. More specifically, the operating cycle commences when the first vertical or off-vertical edge of the sheet arrives in proximity to the grinding spindle, the sheet halting to enable said spindle to operate vertically, from the bottom upwards, along the entire said first edge, to then halt its travel. At this point the sheet is made to again advance in the entry-exit direction, while maintaining the spindle fixed so as to grind the upper horizontal edge of the sheet. To process the other two sheet edges the same procedure is repeated but in the opposite direction, such that the spindle is moved vertically or off-vertically downwards to process the entire other vertical edge of the sheet, after which the spindle remains fixed while causing the sheet to traverse in the exit-entry direction in order to process the entire lower edge. The processed sheet is finally made to traverse in the entry-exit direction to remove it from the grinding machine.

This description is valid for rectangular glass sheets and more generally for those having mutually perpendicular edges. In the case of differently shaped sheets, but with a rectilinear lower edge, a vertical or off-vertical movement of the grinding spindle is combined with horizontal traversing of the sheet, in order to follow its perimeter. In all cases, in order to be able to grind its lower edge, the sheet must be firstly moved rearwards, to then retrace its entire withdrawal stroke.

Known off-vertical grinding machines present certain drawbacks, and in particular:
- the edges of a glass sheet are not all uniformly processed, with consequent different finishing between the various edges;
- the repeated movements of the glass sheet during the grinding cycle can result in positioning errors, which can prejudice the required final sheet dimensions;
- said glass sheet movements during the grinding cycle can mean that even if a series of glass sheets all of equal dimensions are to be obtained, they may instead present dimensional differences;
- the grinding cycle also consumes time due to the need to move the sheet rearwards in order to be able to process its lower edge.

The object of the present invention is to provide an off-vertical grinding machine for glass or stone sheets with at least one rectilinear edge, which does not present the aforestated drawbacks. This object is attained by the grinding machine of the present invention, in accordance with claim 1.

The invention will be more apparent from the ensuing description of one embodiment thereof. In this description reference is made to the accompanying drawings, in which:
Figure 1 is a front isometric view of a machine according to the invention;
Figure 2 is a rear isometric view thereof.

In the figures the reference numeral 10 indicates the machine for grinding glass or stone sheets, including profiled sheets, which are disposed "vertically" but with at least one side rectilinear. As can be seen from the figures, the machine 10 comprises a base 12 carrying drive means 14, 15 which enable a glass sheet 19 to traverse in the horizontal direction (traversing direction) indicated by the arrow A. These drive means comprise in the specific illustrated case two aligned horizontal transfer beams, indicated respectively by 16 and 17, on the outside of each of which there is provided a relative series of motorized wheels 18 on which the rectilinear lower edge 20 of the sheet 19 fed to the machine 10 is intended to rest. As already stated, the sheet 19 is off-vertical, i.e. slightly inclined by 3-4° to the vertical, such that one of its sides rests on the first lateral resting means, which in the specific illustrated case comprise a first frame indicated overall by 22, itself comprising horizontal bars 23 which come into contact with the corresponding side of the sheet 19.

The frame 22 comprises a sidepiece indicated overall by 24. The sidepiece 24 also carries the second lateral resting means comprising a second frame 26, similar to the frame 22, but disposed further downstream.

On operating the motorized wheels 18 in the appropriate direction, the sheet 19 can be advanced as far as a processing position defined by stop means which determine its positioning, preventing its further advancement by comprising in this specific case a reference stop 28.

The sidepiece 24 also carries suction means for retaining a sheet 19 in said processing position, these means comprising in this specific illustrated case a plurality of sucker elements 30 selectively connectable to a suction source (not shown).

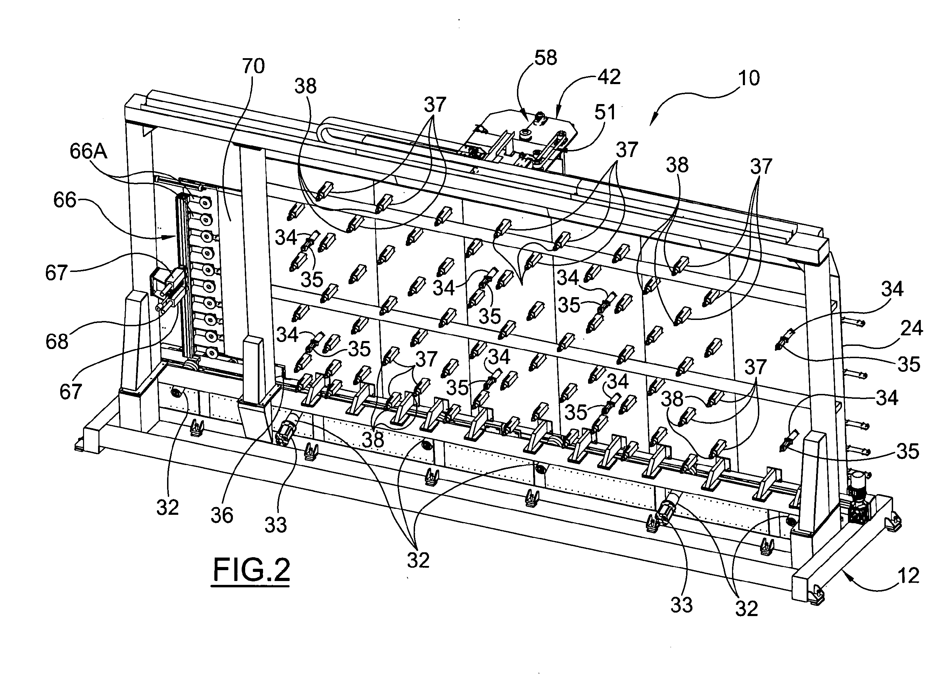

It should be noted at this point that the drive means 14, 15, the lateral resting means 22, 26 and the reference stop means 28 can be retracted towards the sidepiece 24 such as not to interfere with said grinding spindle when this latter grinds the perimeter of the sheet 19. For this purpose the drive beams 16, 17 are carried by guides 32 (Figure 2) which enable them to be drawn rearwards by means of pneumatic actuators 33; the lateral support frames 22 and 26 are carried by guides 34 which enable them to be drawn rearwards by means of pneumatic actuators 35; the reference stop 28 can also be moved rearwards by means of a similar device (just visible in Figure 2 and indicated by 36).

The sucker elements 30 are also mounted on a relative guide 37 which enables them to be selectively drawn rearwards by means of a pneumatic actuator 38. The sucker elements 30 lie in a withdrawn position during the two traversing stages of a sheet 19, i.e. while this latter is being brought into its processing position and, after processing, while it is undergoing removal.

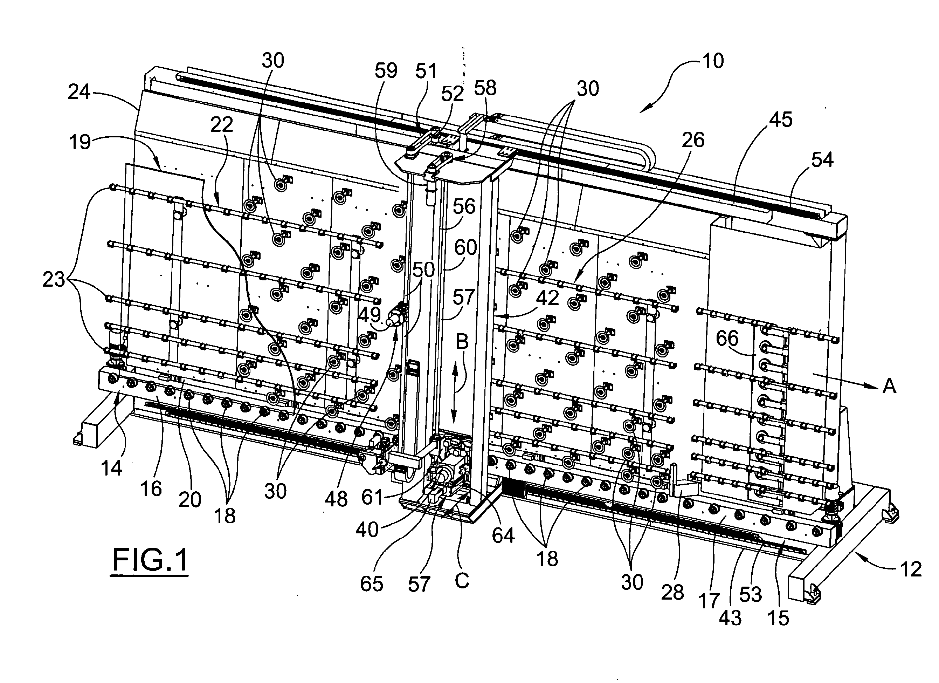

The grinding spindle 40 is provided with a relative grinding head (not visible in the figures as it faces the interior of the machine 10). The means for moving the grinding spindle 40, whether off-vertically or horizontally, comprise a mover unit 42 slidable in both senses in the direction A on two lower guides 43 and 44 fixed to the base 12, and an upper guide 45 rigid with the sidepiece 24, such as to enable it to move horizontally in the direction A. It should be noted that in Figure 1 the same grinding spindle 40 is shown twice, in both its minimum elevation and maximum elevation positions, it being understood however that only one spindle 40 is provided.

This traversing is achieved by a drive unit 48, comprising a gearmotor 49 which by means of drive shafts 50 drives relative belts 51 and pinions 52 which engage corresponding racks 53 and 54 rigid with the base 12 and with the sidepiece 24 respectively.

The unit 42 comprises two vertical guides, of which Figure 1 shows only one, indicated by 56, to which guides a carriage 57 is coupled, to slide in both senses in the direction B. This carriage is driven by a drive unit indicated overall by 58, comprising a gearmotor 59 operating a recirculating ball lead-screw 60 which drives a lead-nut 61 rigid with the carriage 57.

Two guides 64 provided on the carriage 57 perpendicular to the plane of the sheets 19 enable the grinding spindle 40 to move in both senses in the direction C by means of a drive unit 65, rigid with the carriage 57, comprising a gearmotor operating a recirculating ball lead-screw which drives a lead-nut traversing rigidly (direction C) with the spindle 40.

As is apparent, the fact that the spindle 40 can traverse both in the direction A and in the direction B enables it to process the entire perimeter of a sheet 19 located in its processing position and retained in this position by the sucker elements 30 adapted to make contact with the sheet 19.

The further facility for moving the spindle 40 in the direction C enables it to be withdrawn from the sheets 19 during their traversing. The machine 10 has the further characteristic of being provided with a spare tool store 66 (Figure 2) of conventional type, which contains spare tools and is disposed close to the exit of the machine 10. The store 66, provided with a protection cover 70, comprises two guides 67 which enable it to be moved in the direction C by means of a pneumatic actuator 68, such as to bring the tool holder 66A from a withdrawn position to an advanced position to enable the grinding spindle 40 to undergo tool change.

The machine 10 is also provided with a conventional control unit (not shown) of microprocessor type, which controls its operation.

The operation of the machine 10 will now be described, although to an expert of the art it will already be apparent from the aforegoing. The glass or stone sheets are loaded, one after another, from the left with reference to Figure 1. Although in the example shown in the figures loading takes place from the left, the present invention is also applicable to machines with right loading. In particular, this figure shows a sheet 19, three edges of which are rectilinear while the fourth is shaped as an undulated line. As already stated, at least the lower edge 20 of the loaded sheet 19 must be rectilinear, to rest on the motorized wheels 18. The parameters relative to the perimetral dimensions to be obtained for the sheets are set on the control unit. These parameters can be set manually for each edge to be processed, or can be inserted together with the number of consecutive sheets having the same dimensions, or can be taken from a database stored directly in the control unit or even from a connected external unit.

The machine 10 is also provided with suitable conventional sensors (not shown in the figures for simplicity) which enable the glass sheets to be measured, to verify the exactness of the set data.

On loading the two sheets 19, the two transfer beams 16, 17 are in their advanced position (Figure 1), as are the lateral support frames 22 and 26, so that the sheet 19 rests lowerly on the wheels 18 and with its side against the frame 22 such as to achieve an inclination (as already stated) of 3-4°. The sucker elements 30 are instead in their withdrawn position.

On operating the motorized wheels 18 the sheet 19 advances in the direction A to a processing position defined by the reference stop 28. Those sucker elements 30 lying within the perimeter of the sheet 19 are now advanced in the direction C so that they come into contact with the relative side of this latter, to be then connected to the suction source (not shown) and retain the sheet 19 in the processing position. At this point the two transfer beams 16 and 17 are moved rearwards, as are the two frames 22 and 26 and the reference stop 28. The control unit now positions the grinding spindle 40 by moving the drive unit 42 in the direction A and the carriage in the direction B, until the spindle 40 is brought into the starting point for grinding (normally, with reference to Figure 1, the lower right corner of the sheet 19). The perimeter of the sheet 19, supported only by the relative sucker elements 30, is free and can hence be totally processed without interruptions. At this point the grinding spindle 40 is moved along the guides 64 (direction C) such that the relative grinding wheel (not visible in the figures) is brought into a position corresponding to the sheet thickness. By suitably combining the movement of the drive unit 42 in the direction A and the carriage 57 in the direction B the entire profile of the sheet 19 can be continuously ground, whatever the shape of the sheet, until the starting point is again reached.

If required, the processing can be repeated a second and possibly a third time with grinding wheels of different grain and/or form, achievable in the same manner as the first grinding once the tool has been changed, it being also possible to automatically take into account the previously removed material.

Having concluded the processing of the sheet, the two transfer beams 16 and 17 and the support frames 22 and 26 are returned to their advanced position, while the grinding spindle 40 is withdrawn in the opposite direction to the sidepiece 24, so that the grinding wheel no longer interferes with the sheet. The control unit now interrupts communication between the sucker elements 30 and the suction source so that the processed sheet 19 again rests on the wheels 18 and against the frames 22, 26. The sucker elements 30 are then withdrawn such that they no longer interfere with the processed sheet when the wheels 18 are operated to bring the sheet to the exit (right end with reference to Figure 1) of the machine 10, where it can be unloaded and removed.

By virtue of the machine 10, during the processing of a sheet 19, if the dimensions of this latter allow it, the next sheet can already be loaded after returning the transfer beam 16 and the frame 22 into their advanced position (this evidently only if they do not interfere with the sheet being processed or with the spindle 40).

If the tool has to be changed (for example to carry out a second or third grinding of the same sheet with different grinding wheels or to process a subsequent sheet in a different manner), the control unit causes the grinding spindle 40 to withdraw along the guides 64 (direction C) by operating the gearmotor 65, and causes the unit 42 to move in the direction A by operating the gearmotor 49, to bring it adjacent to the tool change store 66, while also moving the protection cover 70 (also motorized) into the position shown in Figure 2, to then advance the tool carrier 66A from a withdrawn position to an advanced position which is reachable by the grinding spindle 40, with this latter positioned at a tool seat left suitably free. The spindle 40 is now advanced in the direction C until aligned with the free seat. The control unit now causes the unit 42 to advance such that the mounted tool to be replaced is inserted in the relative seat, the spindle 40 is then released and withdrawn in the direction C such that the released tool remains inserted in the seat. At this point the unit 42 moves into a position corresponding with the tool to be mounted and the cycle just described is repeated in the opposite sense in order to mount the new tool.

In conclusion, the grinding machine according to the present invention presents the following advantages:
- the glass sheets are disposed in their working position by a mechanical stop which ensures absolute positioning precision;
- once in the working position the sheet is retained in that position for the entire processing without undergoing movement, consequently eliminating all those errors due to movement;
- each processing cycle takes place with a single tool, so ensuring the same finishing quality over the entire sheet perimeter;
- using a grinding spindle with the related tool, resetting and adjustment (also due to wear) of the grinding wheel is unique;
- processing takes place without dead times due to sheet traversing;
- by providing two transfer beams 16 and 17 and relative lateral support frames 22, 26, and provided that the dimensions of the sheets to be processed do not prevent it, it becomes possible to load the next sheet and bring it as close as possible to the working position while the first is still being processed, with a further significant time saving.

## Claims

1. A machine (10) for grinding glass or stone sheets (19) disposed off-vertical and with at least one rectilinear edge, comprising a frame (12) carrying a spindle (40) for grinding the edges of a sheet (19), traversing means (14, 15) for bringing a glass sheet (19) fed to the machine (10) into a processing position and for then removing the sheet (19) from the processing position when processed, and means (30) for retaining a sheet (19) in the processing position, **characterised in that** the means (30) for retaining the sheet (19) are of the suction type and act on a single face of the sheet (19), means (42) being provided for moving the grinding spindle (40) both off-vertically (B) and horizontally (A) in order to be able to process the entire perimeter of the sheet (19) retained in the processing position; the means (42) for moving the grinding spindle (40) comprising a drive unit (42) also carried by the frame (12) and movable in both senses in the traversing direction (A), the unit (42) comprising a carriage (57) movable both off-vertically (A) and horizontally (B) and carrying the grinding spindle (40).

2. A machine (10) as claimed in claim 1, wherein stop means (28) are provided to define the processing position of a sheet (19) fed to the machine (10).

3. A machine (10) as claimed in claim 1, wherein the traversing means (14, 15) comprise two horizontal aligned transfer beams (16, 17), on the outside of each of which there being provided a relative series of motorized wheels (18) on which the rectilinear lower edge (20) of the sheets (19) fed to the machine (10) is intended to rest.

4. A machine (10) as claimed in claim 3, wherein the sheets (19) resting on the wheels (18) have a slight inclination to the vertical, for this purpose there being provided lateral resting means (22, 26) carried by the frame (12).

5. A machine (10) as claimed in claim 4, wherein the inclination of the off-vertical sheets resting on the wheels (18) is 3-4°.

6. A machine (10) as claimed in claim 3, wherein the two horizontal transfer beams (16, 17) are retractable to leave free the perimeter of a sheet (19) retained by the suction means (30) in the processing position.

7. A machine (10) as claimed in claims 3 and 4, wherein the lateral resting means (22, 26) are also retractable and are in their retracted position during processing of a sheet (19).

8. A machine (10) as claimed in claims 2 and 7, wherein the stop means (28) are also retractable and are in their retracted position during processing of a sheet (19).

9. A machine (10) as claimed in claim 1, wherein the means (30) for retaining a sheet (19) in the processing position comprise a plurality of sucker elements (30) selectively connected to the suction source.

10. A machine (10) as claimed in claim 9, wherein the grinding spindle (40) is movable in both senses relative to the carriage (57) in the direction (C) perpendicular both to the traversing direction (A) and to the off-vertical direction (B).

11. A machine (10) as claimed in claims 1 and 10, wherein the unit (42), the carriage (57) and the spindle (40) are driven in the relative directions (A, B, C) by relative drive units (48, 58, 65).

12. A machine (10) as claimed in claim 1, wherein a tool change store (66) is provided.

13. A machine (10) as claimed in claim 1, wherein a control unit for the machine operation is provided.
